# EUROPÄISCHE PATENTSCHRIFT

(11) **EP 2 545 778 B1**
(45) Veröffentlichungstag und Bekanntmachung des Hinweises auf die Patenterteilung: **04.04.2018**
(21) Anmeldenummer: 12005165.1
(22) Anmeldetag: 13.07.2012
(51) Int. Cl.: A22C 7/00

(54) **Pressform für Fleischwaren**
Mould for meat products
Moule pour produits à base de viande

(30) Priorität: 15.07.2011 DE 102011079272
(43) Veröffentlichungstag der Anmeldung: 16.01.2013
(73) Patentinhaber: Kaufland Fleischwaren Heilbronn GmbH & Co. KG, 74172 Neckarsulm (DE)
(72) Erfinder: Leichter, Herwig, 70190 Stuttgart (DE)
(74) Vertreter: Schmid, Nils T.F.

(56) Entgegenhaltungen:
- DE-A1- 2 942 495
- DE-B4- 10 235 178
- DE-U1- 7 914 264

## Beschreibung

Die Erfindung betrifft eine Pressformeinheit für Fleischwaren, insbesondere Landjäger. Bei der Herstellung von Fleischwaren, insbesondere Landjägern, ist es wichtig, diese paarweise bis zur Ausbildung einer stabilen Form gepresst in einer Form zu halten. Aus der deutschen Patentschrift DE 29 42 495 ist eine Pressformeinheit für Landjäger, umfassend eine Grundplatte mit einer erste Seite und einer der ersten Seite gegenüberliegenden zweite Seite, wobei die erste Seite der Grundplatte eine Mehrzahl an nebeneinander angeordneten Doppelformen zur Aufnahme der zu pressenden Fleischwaren umfasst, wobei jede Doppelform eine erste und zweite Vertiefung umfasst.

Aus dem deutschen Gebrauchsmuster DE 79 14 264 U1 ist ein Landjägerbrett mit mehreren parallel zueinander liegenden Formen jeweils für ein Paar Landjäger oder dergleichen Würste bekannt, wobei die Formen nach oben und an ihren voneinander abgewandten Enden offen sind und wobei in der Mitte jeder Form für ein Landjäger-Paar eine Trennwand mit einem Einschnitt vorgesehen ist. Nachteilig hieran ist, dass die Weiterverarbeitung der ausgeformten Würste mühsam und zeitaufwändig ist.
Aus der deutschen Patentschrift DE 102 35 178 B4 ist eine Vorrichtung zum Vereinzeln von Landjägern bekannt. Hierbei werden, gemäß der Beschreibung, die gefüllten Landjäger paarweise eng aneinander liegend in ein Tablett gelegt; diese Tabletts werden gestapelt, wodurch die Landjägerpaare in die typische rechteckige Querschnittsform gepresst werden. Nach etwa drei bis vier Tagen sind die Landjägerpaare formstabil und müssen zum Räuchern über eine Stange gehängt werden. Zum Vereinzeln der Landjägerpaare wird das Tablett mit den Landjägerpaaren über einem Zufuhrband umgedreht, und die Landjägerpaare werden senkrecht zur Bewegungsrichtung der Transportbänder auf das Zufuhrband gelegt. Nachteilig hieran ist, dass diese Vereinzelungsmaschine erhebliche Kosten verursacht, Platz beansprucht und Energie verbraucht. Weiterhin ist nachteilig, dass die Landjägerpaare auf das Zufuhrband senkrecht zur Bewegungsrichtung der Transportbänder aufgelegt werden müssen, was erheblichen Aufwand erfordert.
Aus dem deutschen Gebrauchsmuster DE 201 12 160 U1 ist eine Pressvorrichtung zur Behandlung von Lebensmitteln bekannt. Die Pressvorrichtung hat mindestens eine von einem ersten und einem beweglich zu dem ersten Element angeordneten zweiten Element begrenzte Presskammer und mindestens eine Druckerzeugungseinrichtung, die da zu eingerichtet ist, über das erste und/oder zweite Element auf die in die Presskammer einzubringenden Lebensmittel einen Druck aufzubringen. Nachteilig hieran ist insbesondere, dass die Bereitstellung der Pressvorrichtung teuer ist und ein Ausfall der Pressvorrichtung zu Stillstandszeiten führt. Der Erfindung liegt daher die Aufgabe zu Grunde, einen oder mehrere der genannten Nachteile zu vermeiden oder zu reduzieren. Insbesondere ist es eine Aufgabe der Erfindung, eine Pressformeinheit für eine leichtere und effizientere Handhabung für die Produktion von Fleischwaren, insbesondere Landjägern, bereitzustellen.

Erfindungsgemäß wird diese Aufgabe gelöst durch eine Pressformeinheit nach Anspruch 1. Ein Vorteil der Erfindung liegt darin, dass damit eine Pressformeinheit bereitgestellt wird, mit der Fleischwaren, insbesondere Landjäger, in eine bestimmte Form gepresst werden können, bevor eine Weiterbehandlung erfolgt, wie beispielsweise das Räuchern in einem Rauchwagen. Insbesondere vorteilhaft wird die effiziente Entnahme der Fleischwaren ermöglicht. Die Pressformeinheit umfasst eine Grundplatte, auch als Formgebungsplatte bezeichnet. Hierbei ist die erste Seite bzw. Oberseite der Formgebungsplatte als Press-Matrize ausgebildet, die insbesondere Fleischwaren mit je zwei zusammenhängenden Teilen aufnehmen kann, wie beispielsweise Landjäger oder Wurstpaare bzw. Doppelwürste, die über eine Verbindung, beispielsweise den Darm bzw. die Hülle, zusammenhängen. Die Fleischware wird dabei in Doppelformen der Formgebungsplatte eingebracht, die der zu bildenden Fleischwarenform entsprechen. Die Doppelformen weisen jeweils erste und zweite Vertiefungen oder Aussparungen auf und können auch als Aussparungs-Paare bezeichnet werden. Dabei ist ein jeweiliges Paar von Aussparungen vorzugsweise in einer Linie angeordnet und derart ausgebildet, dass die Fleischware als zusammenhängendes Paar in das Aussparungs-Paar eingelegt und gepresst werden kann. Dabei sind die Aussparungs-Paare auf der Formgebungsplatte vorzugsweise gleichliegend nachbarlich angeordnet. Zusätzlich weist die Pressformeinheit eine Nut mit einem Nutquerschnitt auf, wobei die Nut als ein länglicher Einschnitt bzw. Ausnehmung mit seitlichen Begrenzungen in der Formgebungsplatte ausgebildet sein kann. Die Nut befindet sich im Bereich der Übergange zwischen den jeweiligen Vertiefungen der Doppelformen. Die Nut hat vorzugsweise eine Länge, die ausreicht, um sich über alle Doppelformen einer Pressformeinheit zu erstrecken. Die Doppelformen sind zu beiden Seiten der Nut angeordnet. Hierbei ist die Nut derart geformt, dass ein Haltestab, der auch als Rauchstock bzw. Entnahmehilfe bezeichnet werden kann, in die Nut gelegt werden kann, insbesondere bevor die Fleischwaren in die Doppelformen der Formgebungsplatte eingebracht werden. Dabei ist die Länge der Nut vorzugsweise so gewählt, dass ein sich über alle Doppelformen erstreckender bzw. ausdehnender Rauchstock ein gemeinsames Entnehmen aller Fleischwaren ermöglicht, beispielsweise nach einem abgeschlossenen Pressvorgang. Insbesondere sind die Doppelformen vorteilhaft derart angeordnet, dass die Fleischwaren nach der gemeinsamen Entnahme bereits vereinzelt auf dem Haltestab mit einem bestimmten Abstand zueinander angeordnet sind. Die Grundplatte bzw. Formgebungsplatte der Pressformeinheit kann insbesondere aus einem für Lebensmittel geeigneten, hygienischen Material bestehen oder solches Material aufweisen. Besonders bevorzugt ist Kunststoff. Besonders bevorzugt ist, dass eine Pressformeinheit 22 Doppelformen aufweist.

Es ist bevorzugt, dass die Pressformeinheit einen Haltestab zum Herausnehmen der Fleischwaren mit einer Längsachse und einem Querschnitt quer zu der Längsachse umfasst, der in der Nut herausnehmbar angeordnet ist und sich entlang seiner Längsachse über die Mehrzahl der Doppelformen erstreckt, und dessen Querschnitt derart ausgebildet ist, dass der Haltestab zumindest abschnittsweise in der Nut versenkt angeordnet werden kann.

Ein Vorteil dieser Weiterbildung ist, dass der in die Nut der Pressformeinheit eingelegte Haltestab oder Rauchstock, der sich über alle Doppelformen erstreckt bzw. ausdehnt, ein gemeinsames Entnehmen bzw. Anheben oder Abheben der Fleischwaren zusammen mit dem Rauchstock ermöglicht. Dies gilt insbesondere, wenn der Rauchstock vor dem Einbringen der Fleischwaren in die Doppelformen in die Nut gelegt wird. Der Haltestab ist vorzugsweise herausnehmbar in der Nut angeordnet. Hierbei befindet sich der eingelegte Rauchstock mindestens zu einem Teil des Querschnitts in der Nut, das heißt, vorzugsweise in oder unterhalb der Ebene, die durch die die Aussparungen bzw. Vertiefungen der Doppelformen enthaltende Oberseite der Formgebungsplatte definiert wird.

Es ist bevorzugt, dass die Nut einen im Wesentlichen U-förmigen, rechtwinkligen oder trapezförmigen Querschnitt aufweist.

Ein Vorteil dieser Weiterbildung ist, dass die Nut durch eine einfache Formgebung, wie beispielsweise einen ebenen Boden und rechtwinklig dazu ausgebildete Seitenwände, die parallel zueinander verlaufen, mittels einfacher Fertigungsmethoden ausgebildet werden kann, beispielsweise Fräsen. Weiterhin kann der Winkel zwischen Boden und Seitenwänden auch derart sein, dass sich ein trapezförmiger Querschnitt der Nut ausbildet. Ebenso können sich in den Bereichen des Aufeinandertreffens von Boden und Seitenwänden abgerundete Übergänge befinden, sodass ein Reinigen der Nut leichter fällt. Weiterhin kann der Boden einen kreisabschnittsförmigen bzw. runden Querschnitt aufweisen, der in senkrecht oder anderswinklig angesetzte Seitenwände übergeht.

Es ist bevorzugt, dass die erste Seite der Grundplatte eine oder mehrere mit der Nut verbundene Zugriffsvertiefungen umfasst, die insbesondere so ausgebildet ist/sind, dass der Haltestab im versenkt angeordneten Zustand leichter durch Zugreifen von der Nut abhebbar ist.

Ein Vorteil dieser Weiterbildung ist, dass die Zugriffsvertiefung der Nut, die auch als Entnahmehilfserweiterung der Nut bezeichnet werden kann, sich seitlich über den eigentlichen Querschnitt der Nut hinaus erstreckt und somit einen erweiterten Raum um den eingelegten Haltestab bzw. Rauchstock an dieser Stelle schafft, so dass ein Bediener den Rauchstock besser zur Entnahme bzw. zum Abheben greifen kann. Insbesondere können zwei solche Zugriffsvertiefungen der Nut derart angeordnet werden, dass ein Bediener gleichzeitig mit beiden Händen den Rauchstock greifen und dann entnehmen kann, vorzugsweise im Bereich der beiden Enden des Rauchstocks. Hierbei kann die Entnahmehilfserweiterung bzw. Zugriffsvertiefung auch tiefer als die Nut sein oder als Loch in der Formgebungsplatte bzw. Grundplatte der Pressformeinheit ausgebildet sein.

Es ist bevorzugt, dass die die Grundplatte in der Nut eines oder mehrere Durchstoßlöcher umfasst, die insbesondere so ausgebildet ist/sind, dass der Haltestab im versenkt angeordneten Zustand durch Durchstoßen einer Hebevorrichtung von der Nut abhebbar ist.

Ein Vorteil dieser Weiterbildung ist, dass damit der Haltestab durch geeignete Werkzeuge bzw. Greifer oder Halter von unten angehoben bzw. hochgedrückt werden kann, und somit leichter aus der Nut entnommen bzw. entfernt werden kann. Dies ermöglicht ein maschinelles oder automatisiertes Entnehmen des Haltestabs und der daran angeordneten Fleischwaren aus den Doppelformen der Grundplatte der Pressformeinheit.

Es ist bevorzugt, dass die Nut durchlaufend ist.

Ein Vorteil dieser Weiterbildung ist, dass die Nut sich über die gesamte Formgebungsplatte bzw. Grundplatte erstreckt. Dadurch kann der Haltestab durch Anfassen an den Enden aus der Nut entnommen bzw. abgehoben werden. Ebenfalls ist der eingelegte Haltestab von der Seite der Pressformeinheit aus sichtbar. Weiterhin ist die Fertigung einer durchgehenden Nut besonders einfach, da die Nutenden nicht gesondert bearbeitet bzw. bei der Fertigung berücksichtigt werden müssen.

Alternativ kann die Nut abgesetzt sein.

Ein Vorteil dieser alternativen Weiterbildung ist, dass die Nut sich nicht bis zum Rand der Grundplatte erstreckt, sondern die Nutenden etwas vom Rand entfernt sind. Dadurch ist die Grundplatte an diesen Stellen stabiler.

Es ist bevorzugt, dass die ersten und zweiten Vertiefungen jeweils so angeordnet sind, dass die Flucht der jeweiligen Doppelform im Wesentlichen rechtwinklig zur Nut ausgebildet ist.

Ein Vorteil dieser Weiterbildung ist die besonders Platz sparende Anordnung der Vertiefungen bzw. insgesamt der Doppelformen, die auch als Aussparungs-Paare bezeichnet werden können, in die die Fleischware angeordnet wird. Weiterhin sind die Aussparungs-Paare durch die im Wesentlichen rechtwinklige Anordnung zur Nut dabei über die Nut in kürzester Ausdehnung verbunden, sodass die zusammenhängenden Teile der Fleischware, insbesondere Landjäger, eine möglichst kurze Verbindung zueinander aufweisen, wenn sie in die Aussparungs-Paare eingelegt sind.

Es ist bevorzugt, dass die ersten und/oder zweiten Vertiefungen der Doppelformen einen im Wesentlichen U-förmigen, rechtwinkligen, trapezförmigen oder runden Querschnitt aufweisen.

Ein Vorteil dieser Weiterbildung ist, dass die Vertiefungen bzw. Aussparungen der Doppelformen durch eine einfache Formgebung, wie beispielsweise einen ebenen Boden und rechtwinklig dazu ausgebildete Seitenwände, die parallel zueinander verlaufen, durch einfache Fertigungsmethoden ausgebildet werden können, beispielsweise Fräsen. Vorteilhaft ist beispielsweise, wenn die ersten und/oder zweiten Vertiefungen der Doppelformen nutförmig ausgebildet sind. Ebenso können sich in den Bereichen des Aufeinandertreffens von Boden und Seitenwänden abgerundete Übergänge befinden, sodass ein Reinigen der Vertiefungen bzw. der Doppelformen allgemein leichter fällt. Ebenfalls ist dies vorteilhaft, wenn die gewünschte Formgebung der Fleischware einen im Wesentlichen rechteckigen oder quadratischen Querschnitt erfordert, wie beispielsweise bei Landjägern. Andere Querschnitte der Vertiefungen bzw. Aussparungen ergeben sich für andere Fleischwaren, beispielsweise in Form eines halben Kreises oder eines anderen Kreisabschnitts oder auch in Trapezform.

Es ist bevorzugt, dass die ersten und/oder zweiten Vertiefungen derart ausgebildet sind, dass die Doppelformen durchlaufend ausgebildet sind.

Hierbei ist die Doppelform bzw. sind die erste und zweite Vertiefung als durchgehende Aussparung in der Grundplatte ausgebildet, so dass sich eine Vertiefung von der Nut bis zu dem jeweiligen Rand der Grundplatte erstreckt und am jeweiligen Rand der Grundplatte eine Öffnung zur Seite hin aufweist. Ein Vorteil dieser Weiterbildung ist, dass sich die voneinander abgewandten Enden der Vertiefungen der Doppelformen bis zum jeweiligen Rand der Grundplatte erstrecken. Somit kann die Fleischware vor dem Pressen, während des Pressens oder nach dem Pressen auf eine definierte Länge zugeschnitten werden, indem der über den Rand der Grundplatte hinaus gehende Überstand der Fleischwaren abgeschnitten wird.

Alternativ ist es bevorzugt, dass die ersten und/oder zweiten Vertiefungen derart ausgebildet sind, dass die Doppelformen abgesetzt ausgebildet sind.

Hierbei erstrecken sich die voneinander abgewandten Enden der Vertiefungen der Doppelformen nicht bis zum jeweiligen Rand der Grundplatte, sondern die Vertiefungsenden sind etwas vom Rand entfernt angeordnet. Somit ist keine Öffnung der Vertiefungen zu einer Seite der Grundplatte ausgebildet. Ein Vorteil dieser Weiterbildung ist, dass die Grundplatte an diesen Stellen stabiler ist. Ebenfalls kann die Form, insbesondere die Länge der Fleischware, besser beeinflusst und bestimmt werden. Insbesondere kann das Ende der Fleischware, beispielsweise der Landjäger, genau geformt werden, beispielsweise durch Ausbilden der abgesetzten Endbereiche der Vertiefungen der Doppelformen in einer bestimmten, gewünschten Form.

Es ist bevorzugt, dass die jeweils erste Vertiefung jeder Doppelform über jeweils eine erste Nutwandausnehmung mit einem bestimmten Nutwandausnehmungsquerschnitt mit der Nut verbunden ist und die jeweils zweite Vertiefung jeder Doppelform über jeweils eine zweite Nutwandausnehmung mit einem bestimmten Nutwandausnehmungsquerschnitt mit der Nut verbunden ist.

Ein Vorteil dieser Weiterbildung ist, dass der Übergang zwischen den jeweiligen Vertiefungen bzw. Aussparungen einer Doppelform und der Nut so ausbildbar ist, dass die Formgebung der Fleischwaren an der Verbindung zwischen den Fleischwarenteilen und den einander zugewandten Enden der Fleischwarenteile optimal gestaltet werden kann. Hierbei kann beispielsweise eine Einschnürung bzw. Verengung der jeweiligen Vertiefungen bzw. Aussparungen am Übergang zur Nut angeordnet sein, der die Lage der Fleischwarenteile definiert und weiterhin eine gewünschte Formgebung im Bereich der Verbindung der beiden Fleischwarenteile ermöglicht. Beispielsweise kann die jeweilige Vertiefung im Bereich der Einschnürung abgerundet sein. Ebenso kann der Übergang so ausgebildet sein, dass der Querschnitt der Öffnungen zwischen der Nut und den Vertiefungen der Doppelformen dem Querschnitt der Vertiefungen entspricht, und somit ein vereinfachtes Einlegen der Fleischware in die Doppelformen ermöglicht.

Es ist bevorzugt, dass der Nutquerschnitt und die ersten und zweiten Vertiefungen der Doppelformen so ausgebildet sind, dass die Nut tiefer als die Vertiefungen ist.

Ein Vorteil dieser Weiterbildung ist, dass der in die Nut einlegbare Rauchstock einen relativ großen Querschnitt im Vergleich zur Form der Fleischwaren aufweisen kann und somit stabil ist.

Alternativ ist es bevorzugt, dass der Nutquerschnitt und die ersten und zweiten Vertiefungen der Doppelformen so ausgebildet sind, dass die Vertiefungen tiefer als die Nut sind.

Ein Vorteil dieser alternativen Weiterbildung ist, dass der in die Nut einlegbare Rauchstock einen relativ kleineren Querschnitt im Vergleich zur Form der Fleischwaren aufweisen kann und somit nicht unnötig groß ist. Dies ist insbesondere wichtig bei großen Fleischwürsten mit relativ großem Querschnitt.

Alternativ ist es bevorzugt, dass der Nutquerschnitt und die ersten und zweiten Vertiefungen der Doppelformen so ausgebildet sind, dass die Nut und Vertiefungen gleich tief sind.

Ein Vorteil dieser alternativen Weiterbildung ist, dass die Herstellung dieser Grundplatte bzw. Formgebungsplatte besonders einfach ist, und sie relativ flach ausgebildet sein kann.

Es ist bevorzugt, dass die Nut derart angeordnet und ausgebildet ist, dass der Haltestab vollständig in der Nut versenkt angeordnet werden kann.

Ein Vorteil dieser Weiterbildung ist, dass der Haltestab im in der Nut angeordneten Zustand nicht über die Nut bzw. die Formgebungsplatte herausragt. Somit ist es möglich, die Formgebungsplatte auf eine andere gleich ausgebildete Formgebungsplatte zu legen und somit die Unterseite bzw. zweite Seite der Formgebungsplatte als Gegenstück der Formgebungsplatte, die als Matrize ausgebildet ist, zu benutzen. Dies ist insbesondere dann von Vorteil, wenn die zweite Seite der Grundplatte plan ausgebildet ist.

Es ist bevorzugt, dass der Haltestab vollständig in der Nut versenkbar ausgebildet ist.

Es ist bevorzugt, dass der Haltestab ein Rundstab ist.

Ein Vorteil dieser Weiterbildung ist, dass der Haltestab bzw. Rauchstock besonders günstig herzustellen ist und besonders einfach in der Nut angeordnet werden kann. Weiterhin kann die Aufhängung des Rauchstocks in einem zugehörigen Rauchstockwagen besonders einfach ausgebildet sein.

Es ist bevorzugt, dass der Haltestab im Bereich der jeweiligen Doppelformen Verrutsch-Sicherungsvorrichtungen umfasst.

Ein Vorteil dieser Weiterbildung ist, dass der Haltestab Verrutsch-Sicherungsvorrichtungen bzw. lagesichernde Vorrichtungen an den Stellen umfasst, die bei einem Einlegen des Haltestabs in die Nut ungefähr im Bereich der Doppelformen liegen. Dabei ist ein jeweiliger lagesichernder Abschnitt des Haltestabs zwischen den Teilen einer in die jeweilige Doppelform eingelegte Fleischware, beispielsweise im Bereich der Verbindung zwischen den beiden miteinander verbundenen Landjägern eines Landjägerpaares. Diese lagesichernden Vorrichtungen bewirken, dass an dem Haltestab angeordnete Fleischwaren während der Entnahme aus den Doppelformen bzw. allgemein aus der Grundplatte, sowie beim Transport des Haltestabs, an einer Lageänderung entlang der Längsachse des Haltestabs gehindert werden. Somit bleiben Lage und Abstand der Fleischwaren zueinander erhalten.

Es ist bevorzugt, dass die Verrutsch-Sicherungsvorrichtungen als im Wesentlichen U-förmige, rechtwinklige, trapezförmige, dreieckige oder kerbenförmige Sicherungsvertiefungen ausgebildet sind.

Ein Vorteil dieser Weiterbildung ist, dass die lagesichernden Vorrichtungen am Rauchstock besonders einfach hergestellt werden können, beispielsweise durch Abflachen des Rauchstocks an diesen Stellen, oder Ausnehmen des Materials des Rauchstocks. Hierbei können die lagesichernden Vorrichtungen sich entlang des gesamten Umfangs des Rauchstocks erstrecken oder nur entlang eines Teils des Umfangs des Rauchstocks ausgebildet sein. Kerbenförmige und dreieckige Ausnehmungen zur Lagesicherung sind in diesem Sinne besonders sicher.

Es ist bevorzugt, dass der Haltestab so ausgebildet ist, dass im Bereich der jeweiligen Doppelformen der obere Abschluss des Haltestabs in versenktem Zustand auf halber Höhe der Vertiefung ist.

Ein Vorteil dieser Weiterbildung ist, dass sich die Stelle, an der die Fleischwaren über den eingelegten Haltestab bzw. Rauchstock reichen, in einer Höhe befindet, die sich ungefähr auf der Hälfte zwischen dem Boden der Vertiefungen bzw. Aussparungen der Doppelformen und der Oberflächenebene der ersten Seite bzw. Oberseite der Grundplatte befindet. Damit kann beim Pressen eine besonders bevorzugte Form der Fleischwaren erreicht werden, da die jeweilige Verbindung zwischen den Fleischwarenteilen in den jeweiligen Vertiefungen mittig an den Fleischwarenteilen ansetzen kann und sich über den Haltestab erstrecken kann.

Es ist bevorzugt, dass der Haltestab mindestens eine Positionsstabilisierungsvorrichtung umfasst.

Hierbei ist eine Positionsstabilisierungsvorrichtung beispielsweise eine Querschnittsvergrößerung des Haltestabs an dieser Stelle, sodass der Haltestab beispielsweise in der Nut zwischen den Seitenwänden der Nut eingeklemmt ist, bzw. die seitliche Bewegung stark begrenzt ist. Ebenso kann es eine anderweitige Querschnittsveränderung sein, die geeignet ist, den Haltestab an einer Lageänderung zu hindern. Ein Vorteil dieser Weiterbildung ist, dass der Rauchstock, wenn er in die Grundplatte eingelegt ist, sich nicht verdrehen, verrutschen oder seine Lage sonstig negativ verändern kann. Weiterhin ist eine stabile Fixierung auf dem Rauchwagen bzw. Transportbehälter möglich.

Es ist bevorzugt, dass die zweite Seite der Grundplatte den Doppelformen zugeordnete Stempel und/oder Gegendoppelformen umfasst.

Ein Vorteil dieser Weiterbildung ist, dass durch die den Doppelformen auf der ersten Seite bzw. Oberseite der Grundplatte gegenüberliegenden Gegendoppelformen bzw. Gegenformpaare auf der zweiten Seite bzw. Unterseite der Grundplatte die Fleischwaren beim Pressen besser geformt werden können. Hierbei können beispielsweise Erhebungen auf der Unterseite der Grundplatte, die sich beim Aufeinanderlegen mit einer weiteren Grundplatte in den Raum der Vertiefungen der Doppelformen bzw. der Aussparungs-Paare dieser Grundplatte erstrecken, so geformt sein, dass die Fleischware, die sich beim Pressen in der Doppelform befindet, in einen runden, ovalen, rechteckigen, quadratischen, herzförmigen oder anderen für Fleischwaren, insbesondere Landjäger, typischen Querschnitt gepresst wird. Insbesondere kann ein im Wesentlichen rechteckiger Querschnitt herbeigeführt werden, der aber vorzugsweise abgerundete Ecken aufweist. Diese Erhebungen werden auch als Stempel bezeichnet. Ebenfalls kann anstelle von Erhebungen bzw. Stempeln, die in die Aussparungen bzw. Vertiefungen der Doppelformen eingreifen, eine Anzahl von Gegenaussparungen bzw. Gegenvertiefungen in die Unterseite der Grundplatte eingebracht werden. Ebenso können kombinierte Erhebungen und Aussparungen angeordnet werden.

Es ist bevorzugt, dass die zweite Seite der Grundplatte eine der Nut zugeordnete Gegennut umfasst.

Ein Vorteil dieser Weiterbildung ist, dass die Nut auf der ersten Seite bzw. Oberseite der Grundplatte nicht so tief sein muss, indem auf der zweiten Seite bzw. Unterseite ebenfalls eine als Gegennut bezeichnete Nut angeordnet wird; außerdem ist die Formgebung der Fleischwaren wesentlich flexibler.

Es ist bevorzugt, dass die zweite Seite der Grundplatte plan ist.

Ein Vorteil dieser Weiterbildung ist, dass die Grundplatte eine Oberseite hat, die als Matrize ausgebildet ist, also Doppelformen für die Fleischwaren aufweist, und eine Unterseite hat, die eben ist. Somit kann beim Stapeln von Grundplatten bzw. Formgebungsplatten die Unterseite in besonders einfacher Weise als Presswerkzeug für eine darunter liegende Grundplatte bzw. Formgebungsplatte dienen.

Weitere beispielshafte Vorteile, Besonderheiten und Weiterbildungen der Erfindung ergeben sich aus der nachfolgenden Darstellung bevorzugter Ausführungsformen und anhand der Abbildungen.

Von den Abbildungen zeigt:
- Fig. 1: ein Ausführungsbeispiel einer erfindungsgemäßen Pressformeinheit;
- Fig. 2: eine Weiterentwicklung des Ausführungsbeispiels der erfindungsgemäßen Pressformeinheit gemäß Fig. 1;
- Fig. 3: ein Ausführungsbeispiel einer Pressvorrichtung;
- Fig. 4: ein Detail des Ausführungsbeispiels der Pressvorrichtung gemäß Fig. 3;
- Fig. 5: eine Weiterentwicklung der Pressvorrichtung der Fig. 3 und 4;
- Fig. 6: einen Pressvorgang unter Benutzung der Pressvorrichtung.

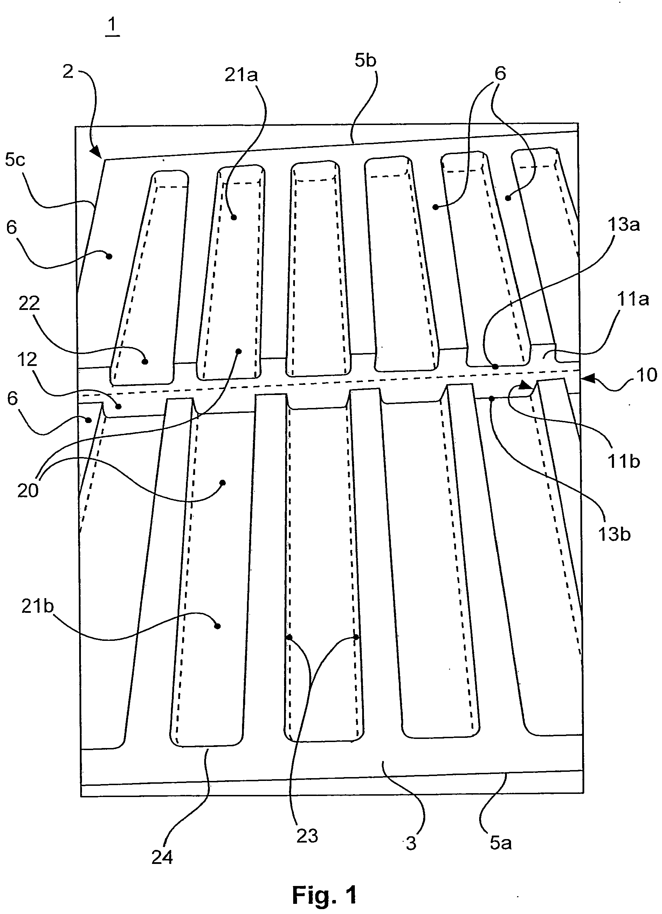

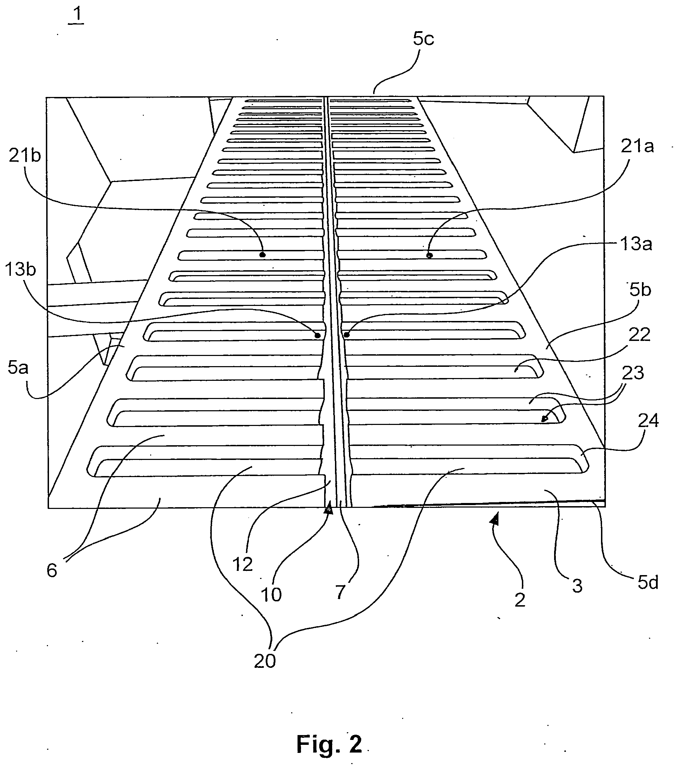

Fig. 1 ist eine schematische Darstellung eines ersten Ausführungsbeispiels der erfindungsgemäßen Pressformeinheit 1. Die Pressformeinheit 1 dieses Ausführungsbeispiels ist zum Pressen von Landjägern ausgebildet. Die Grundplatte 2 der Pressformeinheit 1 ist typischerweise aus einem lebensmitteltauglichen bzw. hygienischen Kunststoff hergestellt, es können aber auch andere Kunststoffe, Metalle oder Holz verwendet werden. Die Grundplatte ist rechteckig und hat eine Oberseite 3 und eine dazu parallele Unterseite. Die Grundplatte wird an den vier Seiten 5a-5d durch einen Rand begrenzt, wobei Seite 5d, die zur Seite 5c parallel ist, nicht in Fig. 1 dargestellt ist, jedoch in Fig. 2.

Eine Nut 10 ist in die Oberseite 3 eingelassen, wobei sie parallel zu den beiden längeren Seiten 5a, 5b mittig verlaufend angeordnet ist. Die Nut 10 umfasst einen Nutquerschnitt und ist als durchgehender länglicher Einschnitt ausgebildet und endet jeweils am Rand der beiden kürzeren Seiten 5c, 5d mit einer Öffnung. Somit ist die Nut 10 der Pressformeinheit durchlaufend ausgebildet. Hierbei ist nur eine der beiden kürzeren Seiten, nämlich Seite 5c, dargestellt. Die Nut 10 hat parallele Seitenwände 11a, 11b und einen Boden 12. Weiterhin ist der Übergang zwischen Boden 12 und Seitenwänden 11 leicht abgerundet. Somit weist die Nut 10 einen im Wesentlichen rechtwinkligen Nutquerschnitt auf. Die Nut 10 ist so geformt, dass ein Haltestab bzw. Rauchstock 7 in die Nut 10 eingelegt werden kann. Insbesondere ist die Nut 10 derart ausgebildet und angeordnet, dass ein Rauchstock 7 zum Herausnehmen der Fleischwaren zumindest abschnittsweise in der Nut 10 versenkt angeordnet werden kann. Der Haltestab 7 weist eine Erstreckung entlang einer Längsachse über die Mehrzahl der Doppelformen 20, die weiter unten beschrieben wird, und einen Querschnitt quer zur Längsachse auf.

Eine Anzahl von Doppelformen 20 ist in die Oberseite 3 der Grundplatte 2 eingeformt. Diese sind rechtwinklig zu der Nut 10 ausgebildet. Je eine der beiden Vertiefungen bzw. Aussparungen 21a, 21b einer Doppelform 20 befindet sich symmetrisch zu beiden Seiten der Nut 10. Somit umfasst jede Doppelform 20 eine erste und zweite Vertiefung 21a, 21b, die miteinander fluchtend zu beiden Seiten der Nut 10 angeordnet und mit der Nut 10 verbunden sind. Die Flucht der jeweiligen Doppelform ist somit im Wesentlichen rechtwinklig zur Nut ausbildet. Jede Vertiefung 21a, 21b ist länglich ausgebildet und hat einen Boden 22, zwei parallele, zu der Nut 10 rechtwinklige Seitenwände 23 und eine Endwand 24, die die Vertiefung 21a, 21b zum Rand der Grundplatte 2 hin begrenzt. Auf Grund der Endwand 24 sind die Vertiefungen 21a, 21b derart ausgebildet, dass die Doppelformen 20 abgesetzt ausgebildet sind. Zwischen der Endwand 24 und den Seitenwänden 23 ist der Übergang abgerundet, um eine ansprechende Form der Landjäger zu erreichen. Zwischen dem Boden 22 und den Seitenwänden 23 ist der Übergang ebenfalls abgerundet. Somit weisen die Vertiefungen 21a, 21b der Doppelformen 20 einen im Wesentlichen U-förmigen Querschnitt auf. Die Doppelformen 20 sind durch die Seitenwände 23 der jeweiligen Vertiefungen 21a, 21b voneinander getrennt, wobei die Breite der dadurch geformten Trennwände 6 den Abstand der Landjäger voneinander definiert. Zu den beiden kürzeren Seiten 5c, 5d hin befinden sich breitere Trennwände 6, die bis zum Rand reichen.

Die Vertiefungen 21a, 21b sind zur Nut 10 hin geöffnet, das heißt, die Nut 10 und die Vertiefungen 21a, 21b der Doppelformen 20 sind miteinander durch je eine Nutwandausnehmung 13a, 13b verbunden. Somit sind die erste und zweite Vertiefung 21a, 21b jeder Doppelform 20 über jeweils eine erste und eine zweite Nutwandausnehmung 13a, 13b mit einem bestimmten Nutwandausnehmungsquerschnitt mit der Nut 10 verbunden. Die Nutwandausnehmungen 13a, 13b haben dabei den Querschnitt der Vertiefungen 21a, 21b, da die Nut 10 tiefer als die Vertiefungen 21a, 21b der Doppelformen 20 ist.

Die Unterseite der Grundplatte 2 (nicht in Fig. 1 dargestellt) ist dabei plan ausgebildet, sodass mehrere Pressformeinheiten 1 zum Pressen gestapelt werden können und jeweils die Unterseite einer Pressformeinheit 1 auf die Oberseite 3 einer anderen Pressformeinheit 1 - und die in die Doppelformen 20 eingelegten Landjägerpaare - beim Pressen einwirkt.

Fig. 2 ist eine schematische Darstellung einer Weiterentwicklung des ersten Ausführungsbeispiels der erfindungsgemäßen Pressformeinheit 1. Dabei ist ein Haltestab bzw. Rauchstock 7 in die Nut 10 eingelegt. Somit hat die Pressformeinheit 1 einen Haltestab 7 zum Herausnehmen der Fleischwaren mit einer Längsachse und einem Querschnitt quer zu der Längsachse, der in der Nut 10 herausnehmbar angeordnet ist und sich entlang seiner Längsachse über die Mehrzahl der Doppelformen 20 erstreckt, und dessen Querschnitt derart ausgebildet ist, dass der Haltestab 7 zumindest abschnittsweise in der Nut 10 versenkt angeordnet werden kann. Der Haltestab 7 ist ein runder Metallstab, dessen Länge der der Nut 10 entspricht. Der Haltestab 7 ist ein Rundstab. Der Durchmesser ist dabei so gewählt, dass der in die Nut 10 eingelegte Haltestab 7 noch etwas Platz bzw. Luft bis zur Ebene der Oberseite 3 lässt. Somit ist die Nut 10 derart angeordnet und ausgebildet, dass der Haltestab 7 vollständig in der Nut 10 versenkt angeordnet werden kann. Der Haltestab 7 ist vollständig in der Nut 10 versenkbar ausgebildet. Damit können die eingelegten Landjägerpaare beim späteren Pressen verbunden bleiben, ohne dass sie in Gefahr sind, durch den Pressdruck getrennt zu werden. Somit ist der Haltestab 7 so ausgebildet, dass im Bereich der jeweiligen Doppelformen 20 der obere Abschluss des Haltestabs 7 in versenktem Zustand auf halber Höhe der Vertiefung (21a, 21b) ist. Ebenfalls ist noch etwas Platz zu den Seitenwänden 11a, 11b der Nut. Damit kann der Haltestab 7 leichter eingelegt und entnommen werden. Beispielsweise ist der Durchmesser des Metallstabs 6-10mm, besonders vorteilhaft können 8mm sein. Ein Vorteil dieser Weiterentwicklung ist, dass der in die Nut 10 der Pressformeinheit 1 eingelegte Haltestab 7 bzw. Rauchstock, der sich über alle Doppelformen 20 erstreckt bzw. ausdehnt, ein gemeinsames Entnehmen bzw. Anheben oder Abheben der Fleischwaren zusammen mit dem Rauchstock 7 ermöglicht. Dies gilt insbesondere, wenn der Rauchstock 7 vor dem Einbringen der Fleischwaren in die Doppelformen 20 in die Nut 10 gelegt wird.

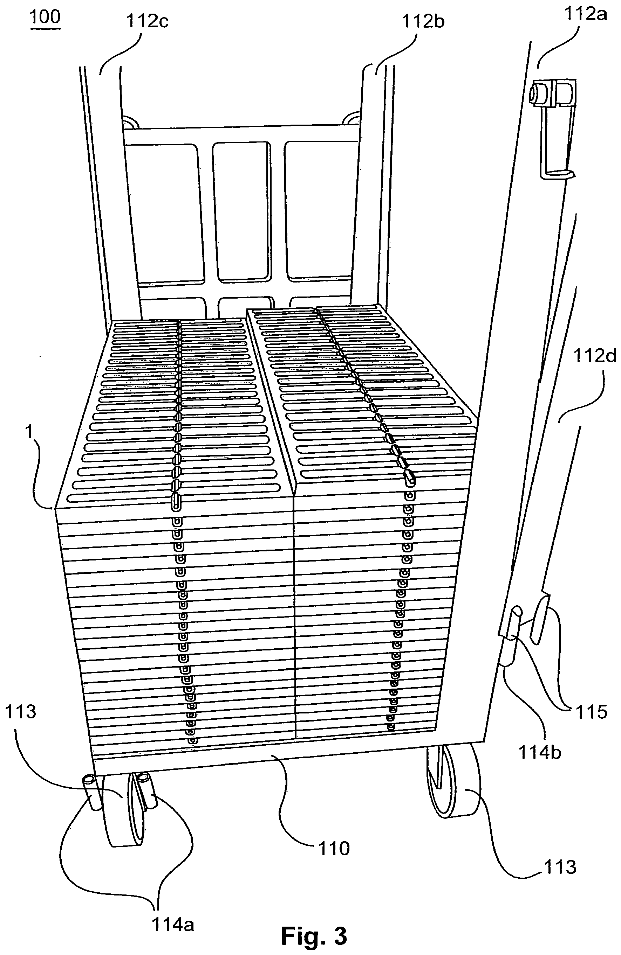

Fig. 3 ist eine schematische Seitenansicht einer Pressvorrichtung. Fig. 3 zeigt eine Presse 100 für Fleischwaren, insbesondere Landjäger. Die Presse 100 hat einen Rahmen mit einem ersten, rechteckigen bzw. plattenförmigen Rahmenelement oder Unterteil 110. Das Unterteil 110 hat an den Ecken rechtwinklig dazu angebrachten Führungen bzw. Pfosten 112a-112d. Die Führungen 112a-112d dienen auch dazu, eine Bewegung des zweiten Rahmenelements 120 relativ zu dem ersten Rahmenelement 110 zu führen. Die beiden Rahmenelemente 110, 120 sind plattenförmig ausgebildet und die lineare Bewegungsrichtung der Rahmenelemente 110, 120 zueinander ist rechtwinklig zu den Rahmenelementen 110, 120 und den Pressformeinheiten 1 sowie identisch mit der Spannrichtung SR. Der Pfosten 112d hat an seinem unteren Ende Rundlinge 115 angeordnet, mittels derer er, um die Presskammer zu begrenzen, in Einstecklöcher bzw. Hülsen 114a angeordnet werden kann, wodurch er lösbar mit dem Unterteil 110 verbunden ist. In der Darstellung nach Fig. 3 ist der Pfosten 112d mittels eines Rundlings 115 in Einsteckloch 114b an Pfosten 112a angeordnet, sodass die Presse 100 beladen werden kann. Somit umfasst die Presse 100 mindestens eine erste und eine zweite Führung 112a, 112c, die mit dem ersten Rahmenelement 110 verbunden sind, die rechtwinklig zu dem ersten Rahmenelement 110 angeordnet sind. An den Ecken sind Räder 113 angebracht. Das erste Rahmenelement bzw. Unterteil 110 besteht aus verschweißten Metallstreben mit einem umlaufenden Rand. Die Pfosten 112 bestehen aus einem rechtwinklig abgewinkelten Blech.

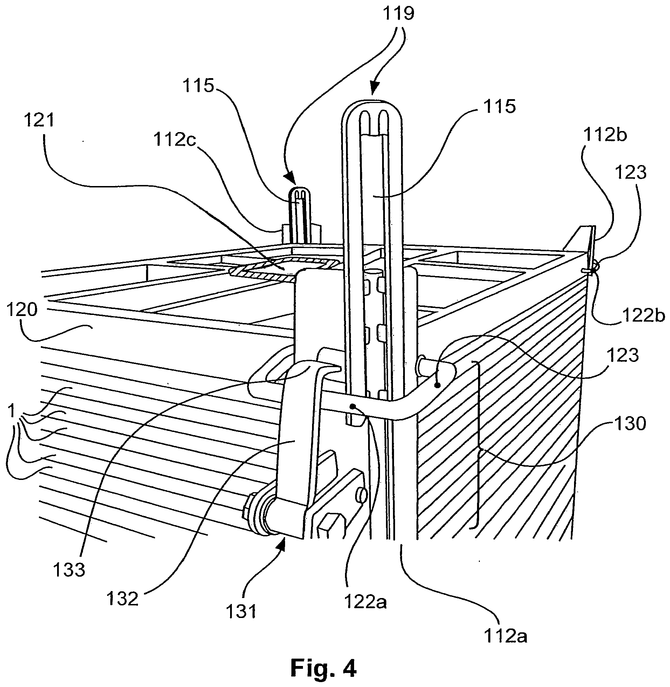

Die Presse 100 hat ein zweites Rahmenelement oder Oberteil bzw. Abschlussrahmen 120; Fig. 4 zeigt eine Seitenansicht, in der der Abschlussrahmen 120 bereits auf Pressformeinheiten ruht, hier beispielsweise erfindungsgemäße Pressformeinheiten 1 des ersten Ausführungsbeispiels. Der Abschlussrahmen 120 ist ebenfalls rechtwinklig und die Größe ist im Wesentlichen die des Unterteils 110, aber so gewählt, dass der Abschlussrahmen 120 innerhalb der die Presskammer begrenzenden Pfosten 112 bewegt werden kann. Dabei ist die Bewegung des Abschlussrahmens 120 auf die Unterplatte bzw. das Unterteil 110 zu oder von ihr weg, also nach unten oder nach oben, wobei der Abschussrahmen 120 im Wesentlichen senkrecht zu den Pfosten 112 geführt wird. Der Abschlussrahmen 120 hat einen Angriffspunkt bzw. Angriffsfläche bzw. Gegenstück 121 für eine Druckerzeugungseinrichtung 150 bzw. ein Verspannwerkzeug, wobei der Angriffspunkt 121 auf der von der Unterteil 110 weg zeigenden Seite des Abschlussrahmens bzw. Oberteils 120 liegt.

Somit hat die Presse 100 mindestens ein erstes Rahmenelement 110 und ein zu dem ersten Rahmenelement 110 beweglich angeordnetes zweites Rahmenelement 120, zwischen denen eine oder mehrere Pressformeinheiten 1 für Fleischwaren aufnehmbar sind. Ebenso umfasst die Presse 100 ein Angriffselement 121, das ausgebildet und angeordnet ist, mit einer, vorzugsweise mechanischen, Druckerzeugungseinrichtung 150, die weiter unten beschrieben ist, derart lösbar gekoppelt zu werden, dass über die Druckerzeugungseinrichtung 150 das erste und das zweite Rahmenelement 110, 120 derart in einer Spannrichtung SR gegeneinander verspannt werden können, dass auf zwischen den Rahmenelementen 110, 120 angeordnete Pressformeinheiten 1 in der Spannrichtung SR ein Druck wirkt.

Weiterhin ist an zwei sich diagonal gegenüber liegenden Pfosten 112a, 112c je eine Verbindungsvorrichtung 119, die eine zweite Kopplungsvorrichtung 119 darstellt, angeordnet. Diese besteht aus je einem oben an die Pfosten 112a, 112c angeschweißten Schlitzelement, das einen länglichen, rechteckigen Schlitz 115 aufweist, der sich über das Pfostenende erstreckt bzw. erhebt. Diese Schlitze 115 sind dazu geeignet, dass eine Druckerzeugungseinrichtung 150 lösbar mit den Pfosten 112a, 112c und damit dem ersten Rahmenelement 110 gekoppelt werden kann. In diesem Ausführungsbeispiel ist der Schlitz 115 durchgehend ausgeführt, das heißt, als rechteckiges Loch.

Weiterhin sind an den vier Ecken des Abschlussrahmens bzw. Oberteils 120 Umgreifer bzw. Führungsumgreifer 122a-122d angeordnet. Diese bestehen je aus einem geformten Rundstück 123, dass zu beiden Seiten der jeweiligen Ecke an dem Abschlussrahmen 120 festgeschweißt ist. Das Rundstück 123 ist so geformt, dass es - zusammen mit dem Abschlussrahmen 120 - einen Innenraum etwas größer als der Pfostenquerschnitt der Pfosten 112 umrandet. Somit kann der Abschlussrahmen 120 derart beweglich mit den Führungen bzw. Pfosten 112 in Verbindung treten, dass die Pfosten 112 eine Führung für die Abschlussrahmenbewegung ausbilden.

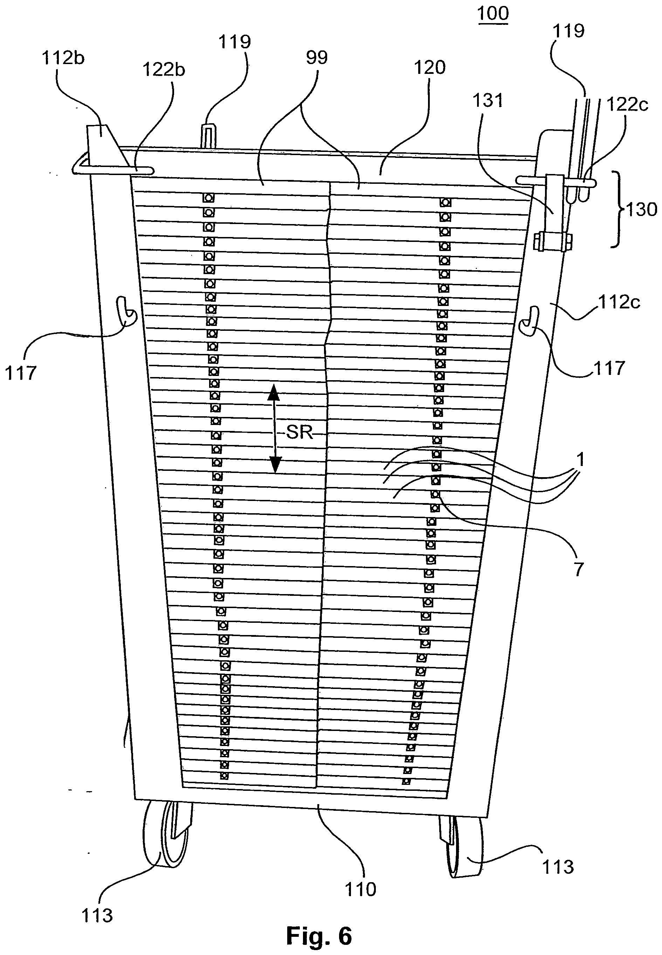

Weiter zeigt Fig. 4 eine Fixiervorrichtung bzw. Sperreinrichtung 130. Sie umfasst einen Haken bzw. Befestigungsklammer 131, der an Pfosten 112a angeordnet ist und somit mit dem zweiten Rahmenelement 120 mechanisch verbunden ist, und einen Umgreifer 122a, der als Eingriffselement bzw. Eingreifelement bzw. Klammereinklinkung für den Haken 131 ausgebildet ist. Somit umfasst die Presse 100 eine Fixiervorrichtung 130, die ausgebildet und angeordnet ist, das erste und das zweite Rahmenelement 110, 120 in einer gegeneinander verspannten Position (siehe Fig. 6) zu fixieren. Der Haken 131 hat eine Stange 132 und eine im Wesentlichen dazu rechtwinklige Spitze 133, die eine Blockierung ausbildet. Der Haken 131 ist drehbar um eine Achse gelagert, deren zwei Lager mit dem Pfosten 112a fest verbunden sind; somit kann der Haken 131 mittels eines Drehelements beweglich um einen Punkt gedreht werden kann, wobei der Punkt wiederum mit einer der Führungen 112 fest verbunden angeordnet ist. Somit umfasst die Fixiervorrichtung 150 einen oder mehrere Haken 131, der an einem ersten Ende drehbar gelagert und mit dem ersten Rahmenelement 110 und/oder einer Führung 112 mechanisch verbunden ist. Zum Feststellen bzw. Fixieren des ersten Rahmenelements 120 gegen das zweite Rahmenelement 110 ist der Haken 131 und insbesondere die Spitze 133 so ausgebildet, dass der Haken über den Umgreifer 122a, der auch als Eingreifelement bezeichnet wird, reicht und den Umgreifer 122a in die Blockierung des Hakens 131 bringt. Somit ist der mindestens eine Haken 131 bei durch die Druckerzeugungseinrichtung 150 aufgebrachtem Druck in das Eingreifelement 122 eingreifbar ausgebildet. Hierbei ist die Feststellposition des Abschlussrahmens 120 in einem definierten Abstand zum Unterteil 110 ausgebildet, alternativ kann die Feststellposition aber auch variabel einstellbar sein.

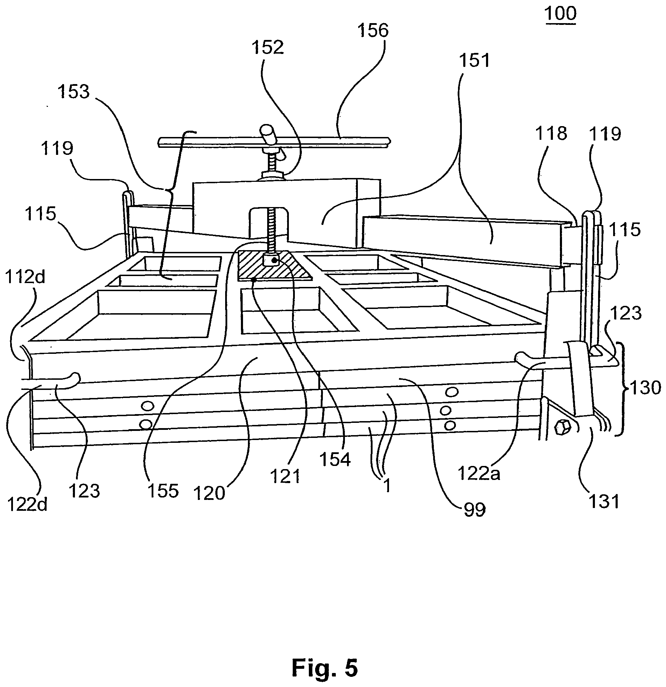

Fig. 5 ist eine schematische Darstellung einer Weiterentwicklung der Pressvorrichtung. Dabei ist eine Druckerzeugungseinrichtung 150 an der Presse 100 angeordnet. Die Druckerzeugungseinrichtung 150 besteht aus einer Stange 151 mit an den Enden angeordneten Verbindungen, sogenannten ersten Kopplungsvorrichtungen 118, die als Gegenschlitzelemente ausgebildet sind, die in den Schlitzen 115 der zweiten Kopplungsvorrichtungen 119 angeordnet sind. Somit ist die Druckerzeugungseinrichtung 150 lösbar mit dem ersten Rahmenelement 110 gekoppelt. Weiterhin hat die Druckerzeugungseinrichtung 150 ein mittig angeordnetes Innengewinde 152. In dem Innengewinde ist eine Spindel 153, die als Druckerzeugungsmittel bezeichnet werden kann, mit einer passenden Spindelschraube 155 angeordnet, so dass durch Drehen der Spindelschraube 155 mittels oben an der Spindelschraube angebrachten Griffen 156 die Spindel nach oben und unten relativ zur Stange 151 verfahren werden kann. Die Spindel 153 umfasst an ihrem unteren Ende einen Stempel 154, der auf das Gegenstück bzw. den Angriffspunkt 121 des Abschlussrahmens 120 einwirkbar ausgebildet ist. Somit ist das Druckerzeugungsmittel 153 auf das Angriffselement 121 der Pressvorrichtung 100 einwirkbar ausgebildet. Vorzugsweise ist der Stempel 154 so mit der Spindelschraube 155 gekoppelt, dass er sich beim Drehen der Spindelschraube 155 nicht mit drehen muss. Somit umfasst die Presse 100 eine lösbar mit dem mindestens einen Angriffselement 121 gekoppelte, vorzugsweise mechanische, Druckerzeugungseinrichtung 150, die derart ausgebildet und angeordnet ist, dass das erste und/oder das zweite Rahmenelement 110, 120 derart in der Spannrichtung SR gegeneinander verspannt werden können, dass auf zwischen den Rahmenelementen 110, 120 angeordnete Pressformeinheiten ein Druck wirkt.

Ein Vorteil dieser abnehmbaren Druckerzeugungseinrichtung 150 ist, dass Druckerzeugungseinrichtung 150 während des Pressens nicht Teil der Presse 100 sein muss. So wird die Druckerzeugungseinrichtung 150 nicht während des gesamten Pressvorgangs blockiert, sondern kann nach dem einmaligen Aufbringen des Drucks in der Spannrichtung SR und dem Fixieren der Rahmenelemente 110, 120 dann von der Pressvorrichtung 100 abgenommen und für andere Pressvorrichtungen 100 verwendet werden; somit müssen nicht unnötig viele Druckerzeugungseinrichtungen 150 vorrätig gehalten werden. Während des Pressvorgangs nimmt die Pressvorrichtung 100 ohne Druckerzeugungsvorrichtung 150 auch weniger Raum ein.

Fig. 6 zeigt einen Pressvorgang unter Benutzung der Pressvorrichtung. Hierbei befinden sich zwei Stapel von Pressformeinheiten 1 mit eingelegten Haltestäben 7 in der Presskammer, auf die durch die gegeneinander verspannten ersten und zweiten Rahmenelemente 110, 120 ein Druck ausgeübt wird. Zuoberst auf jedem Stapel ist eine Oberplatte 99, deren plane Unterseite auf die Oberseite 3 der jeweils obersten Pressformeinheit 1 aufliegt. Die oberste Platte 99 ist somit vollflächig und dient als Abschluss. Die Fixiervorrichtung 130 erhält dabei die Verspannung des Unterteils 110 gegenüber dem Rahmenelement 120, indem Haken 131 in den Umgreifer bzw. Eingriffselement 122c eingreift und eine Bewegung des Abschlussrahmens 120 in die Richtung von dem Unterteil 110 weg blockiert. Somit ist das Eingreifelement bzw. die Klammereinklinkung 122 derart ausgebildet und angeordnet, dass der Haken 131 bzw. die Befestigungsklammer bei durch die Druckerzeugungseinrichtung 150 aufgebrachtem Pressdruck mit dem Eingreifelement 122 bzw. der Klammereinklinkung fest mechanisch verbunden werden kann und somit die Rahmenelemente 110, 120 gegeneinander festhält, auch wenn Druckerzeugungseinrichtung 150 bzw. das Verspannwerkzeug entfernt wird. Weiterhin zeigt Fig. 6 zwei Aufhängehaken 117 an Pfosten 112b und 112c, in die der Abschlussrahmen 120 mittels zweier seiner Umgreifer 122 eingehängt werden kann und somit gelagert werden kann, wenn kein Pressvorgang statt findet bzw. die Presse 100 nicht benutzt wird.

## Patentansprüche

1. Pressformeinheit (1) für Fleischwaren, insbesondere Landjäger, umfassend:
eine Grundplatte (2) mit einer erste Seite (3) und einer der ersten Seite gegenüberliegenden zweite Seite, wobei
die erste Seite (3) der Grundplatte (2) weiterhin eine Mehrzahl an nebeneinander angeordneten Doppelformen (20) zur Aufnahme der zu pressenden Fleischwaren umfasst,
wobei jede Doppelform (20) eine erste und zweite Vertiefung (21a, 21b) umfasst,
**dadurch gekennzeichnet, dass** die erste Seite (3) der Grundplatte (2) eine Nut (10) mit einem Nutquerschnitt umfasst,
dass die Vertiefungen miteinander fluchtend zu beiden Seiten der Nut (10) angeordnet und mit der Nut (10) verbunden sind;
und dass die Nut (10) derart ausgebildet und angeordnet ist, dass ein Haltestab (7) zum Herausnehmen der Fleischwaren, der eine Erstreckung entlang einer Längsachse über die Mehrzahl der Doppelformen (20) und einen Querschnitt quer zur Längsachse aufweist, zumindest abschnittsweise in der Nut (10) versenkt angeordnet werden kann.

2. Pressformeinheit (1) nach Anspruch 1,
**gekennzeichnet durch** einen Haltestab (7) zum Herausnehmen der Fleischwaren mit einer Längsachse und einem Querschnitt quer zu der Längsachse, der in der Nut (10) herausnehmbar angeordnet ist und sich entlang seiner Längsachse über die Mehrzahl der Doppelformen (20) erstreckt, und dessen Querschnitt derart ausgebildet ist, dass der Haltestab (7) zumindest abschnittsweise in der Nut (10) versenkt angeordnet werden kann.

3. Pressformeinheit (1) nach einem der vorhergehenden Ansprüche, wobei die ersten und zweiten Vertiefungen (21a, 21b) jeweils so angeordnet sind, dass die Flucht der jeweiligen Doppelform (20) im Wesentlichen rechtwinklig zur Nut (10) ausgebildet ist.

4. Pressformeinheit (1) nach einem der vorhergehenden Ansprüche, wobei die jeweils erste Vertiefung (21a) jeder Doppelform (20) über jeweils eine erste Nutwandausnehmung (13a) mit einem bestimmten Nutwandausnehmungsquerschnitt mit der Nut (10) verbunden ist und die jeweils zweite Vertiefung (21b) jeder Doppelform (20) über jeweils eine zweite Nutwandausnehmung (13b) mit einem bestimmten Nutwandausnehmungsquerschnitt mit der Nut (10) verbunden ist.

5. Pressformeinheit (1) nach einem der vorhergehenden Ansprüche, wobei die Nut (10) derart angeordnet und ausgebildet ist, dass der Haltestab (7) vollständig in der Nut (10) versenkt angeordnet werden kann.

## Claims

1. A press moulding unit (1) for meat products, in particular pressed smoked sausage, comprising:
a base plate (2) with a first side (3) and a second side lying opposite the first side, wherein
the first side (3) of the base plate (2) further comprises a plurality of double moulds (20) arranged beside one another for accommodating the meat products to be pressed, wherein each double mould (20) comprises a first and second recess (21a, 21b),
**characterised in that** the first side (3) of the base plate (2) comprises a groove (10) with a groove cross-section,
that the recesses are arranged aligned with one another at both sides of the groove (10) and are connected to the groove (10);
and that the groove (10) is constituted and arranged such that a retaining rod (7) for removing the meat products, which has an extension along a longitudinal axis over the plurality of double moulds (20) and a cross-section transverse to the longitudinal axis, can be arranged sunk in the groove (10) at least in some sections.

2. The press moulding unit (1) according to claim 1,
**characterised by** a retaining rod (7) for removing the meat products with a longitudinal axis and a cross-section transverse to the longitudinal axis, which retaining rod is arranged in a removable manner in the groove (10) and extends along its longitudinal axis over the plurality of double moulds (20), and the cross-section whereof is constituted such that the retaining rod can be arranged sunk in the groove (10) at least in some sections.

3. The press moulding unit (1) according to any one of the preceding claims, wherein the first and second recesses (21a, 21b) are each arranged such that the alignment of the respective double mould (20) is constituted essentially at right angles to the groove (10).

4. The press moulding unit (1) according to any one of the preceding claims, wherein each first recess (21a) of each double mould (20) is connected to the groove (10) in each case by a first groove wall recess (13a) with a specific groove wall recess cross-section and each second recess (21b) of each double mould (20) is connected to the groove (10) in each case by a second groove wall recess (13b) with a specific groove wall recess cross-section.

5. The press moulding unit (1) according to any one of the preceding claims, wherein the groove (10) is arranged and constituted such that the retaining rod (7) can be arranged completely sunk in the groove (10).

## Revendications

1. Unité de moulage à la presse (1) pour produits carnés, en particulier saucisses gendarmes, comprenant :
une plaque de base (2) comportant une première face (3) et une seconde face opposée à la première face,
la première face (3) de la plaque de base (2) comportant en outre une pluralité de doubles moules juxtaposés (20) destinés à recevoir les produits carnés à compresser, chaque double moule (20) comprenant un premier et un second creux (21a, 21b),
**caractérisée en ce que** la première face (3) de la plaque de base (2) comprend une rainure (10) dotée d'une section transversale de rainure,
que les creux sont disposés alignés mutuellement des deux côtés de la rainure (10) et sont raccordés à la rainure (10) ;
et que la rainure (10) est conçue et disposée de manière à ce qu'une barre de maintien (7) servant à sortir les produits carnés et qui présente une extension le long d'un axe longitudinal au-dessus de sortir la pluralité de doubles moules (20) et une section transversale qui est transversale à l'axe longitudinal peut être disposée dans la rainure (10) du moins par sections.

2. Unité de moulage à la presse (1) selon la revendication 1,
**caractérisée par** une barre de retenue (7) servant à sortir les produits carnés et comportant un axe longitudinal et une section transversale qui est transversale à l'axe longitudinal et est disposée dans la rainure (10) de manière à pouvoir être sortie et s'étend suivant son axe longitudinal au-dessus de la pluralité de doubles moules (20) et dont la section transversale est conçue de manière à ce que la barre de retenue (7) puisse être disposée enfoncée dans la rainure (10) du moins par sections.

3. Unité de moulage à la presse (1) selon une des revendications précédentes, dans laquelle les premier et second creux (21a, 21b) sont respectivement disposés de manière à ce que l'alignement du double moule respectif (20) soit réalisé sensiblement orthogonalement par rapport à la rainure (10).

4. Unité de moulage à la presse (1) selon une des revendications précédentes, dans lequel le premier creux respectif (21a) de chaque double moule (20) est raccordé respectivement par une première échancrure de la paroi de la rainure (13a) par une certaine section transversale d'échancrure de paroi de rainure à la rainure (10) et que le second creux respectif (21b) de chaque double moule (20) est raccordé respectivement par une seconde échancrure de paroi de la rainure (13b) à une certaine section transversale d'échancrure de paroi de rainure à la rainure (10).

5. Unité de moulage à la presse (1) selon une des revendications précédentes, dans laquelle la rainure (10) est disposée et conçue de manière à ce que la barre de retenue (7) puisse être disposée entièrement enfoncée dans la rainure (10).
